# EUROPÄISCHE PATENTANMELDUNG

(11) **EP 3 095 574 A1**
(43) Veröffentlichungstag der Anmeldung: **23.11.2016**
(21) Anmeldenummer: 16170153.7
(22) Anmeldetag: 18.05.2016
(51) Int. Cl.: B29B 9/06, B29B 9/12, B29B 7/42, B29C 47/08, B29C 47/10, B29C 47/60, B29C 44/34, B29B 7/82, B29C 47/00, B29C 47/82

(54) **VERFAHREN UND VORRICHTUNG ZUR HERSTELLUNG EINES AUFGESCHÄUMTEN GRANULATES, UND DANACH HERGESTELLTES GRANULAT**

(30) Priorität: 21.05.2015 DE 102015209334
(71) Anmelder: SSW Industries GmbH, 51427 Bergisch-Gladbach (DE)
(72) Erfinder: KOCH, Michael, 98693 Ilmenau (DE); DÜNGEN, Matthias, 99094 Erfurt (DE); Sandfort, Frank, 33100 Paderborn (DE); Warnke, Luca, 51427 Bergisch-Gladbach (DE)
(74) Vertreter: Liedtke, Markus

(57) **Zusammenfassung**

Granulat sowie Verfahren und Vorrichtung zu dessen Herstellung, wobei in einen Extruder (2) an einem Aufgabepunkt (3) ein thermoplastischer Kunststoff oder eine Mischung eingegeben, der Kunststoff aufgeschmolzen und über mindestens eine Einspritzdüse (4) ein Fluid als Treibmittel unter Druck zugeführt wird und die mit dem Treibmittel angereicherte Schmelze an einem Extruderaustritt (5) aufschäumend austritt, wobei der Extruder eine Schnecke (6) mit einer ersten Schneckenstufe (6.1) zwischen dem Aufgabepunkt und der mindestens einen Einspritzdüse und einer zweiten Schneckenstufe (6.2) zwischen der mindestens einen Einspritzdüse und dem Extruderaustritt umfasst, dadurch gekennzeichnet, dass durch Auswahl der Geometrie der Schnecke ein Druckverlauf im Extruder so geführt wird, dass der Druck(pₛ) innerhalb der ersten Schneckenstufe zunächst ansteigt und dann bis zur mindestens einen Einspritzdüse signifikant abfällt und der volumetrische Füllgrad in der zweiten Schneckenstufe geringer ist als in der ersten.

## Beschreibung

Die Erfindung betrifft ein Granulat, sowie ein Verfahren und eine Vorrichtung zur Herstellung des Granulates, wobei in einen Extruder ein thermoplastischer Kunststoff eingegeben, der Kunststoff aufgeschmolzen und über eine oder mehrere Einspritzdüsen ein Fluid als Treibmittel unter Druck zugeführt wird und die mit dem Treibmittel angereicherte Schmelze an einem Extruderaustritt austritt und granuliert wird.

Aufgeschäumte Granulate werden zur Herstellung von Formteilen verwendet, die eine geschäumte Struktur aufweisen. Es handelt sich hierbei beispielsweise um Verpackungen oder um Innenteile von Kraftfahrzeugen, die struktursteife Eigenschaften bei geringem Gewicht erfordern. Grundsätzlich ist es erwünscht, dass das aufgeschäumte Granulat eine abgerundete, nach Möglichkeit kugelförmige Gestalt besitzt, die den Transport und das Eingeben des Granulates in die Formen begünstigt, um eine homogene Struktur mit guter Oberfläche der Formteile zu erhalten.

Es ist bereits bekannt, eine mit einem Treibmittel angereicherte Schmelze eines thermoplastischen Kunststoffes über ein am Extruderaustritt angeordnetes Extrusionswerkzeug in die Atmosphäre oder in eine Kalibrierdüse aufschäumend austreten zu lassen. Mittels einer hinter einer Lochplatte als Extrusionswerkzeug angeordneten Unterwassergranulierung erfolgt dann ein Granulieren bei gleichzeitigem Aufschäumen der so erzeugten Schmelzestränge. Hier ist es nachteilig, dass das Granulat eine kraterförmig zerklüftete Oberfläche aufweisen kann, die durch die thermischen und schäumenden Effekte entsteht. Die Oberflächenunebenheiten sind nachteilig bei der für die Herstellung von Formteilen erforderlichen Befüllung der Formen, beeinträchtigen die Oberfläche der hergestellten Formteile und indizieren eine strukturschaumartige Aufschäumung im Innern der Partikel.

Durch die DE 195 47 398 ist es auch bereits bekannt geworden, ein kugelförmiges Granulat herzustellen, indem die Schmelze in einen Unterwassergranulator extrudiert wird. Hier ist es jedoch erforderlich, das Granulat in einem zweiten Verfahrensschritt in einen druckfesten Reaktor einzugeben und mit einem Treibmittel anzureichern. Das Aufschäumen des Granulates erfolgt dann beim Druckabbau im Reaktor. Bei diesem Verfahren ist es nachteilig, dass die Herstellung eines aufgeschäumten Granulates in zwei aufwendigen Verfahrensschritten erfolgt.

Durch die EP 0 411 437 ist es bereits bekannt geworden, das Treibmittel einem Polymeren bereits im Extruder zuzugeben, wobei dann die Schmelze in ein Kühlmedium extrudiert wird, wobei ein Aufschäumen jedoch ausdrücklich vermieden wird. Das Aufschäumen erfolgt in einem nachfolgenden Arbeitsgang beim Verpressen des Granulates zu einer Platte, verbunden mit einer sich anschließenden Druckerniedrigung.

Aus der DE 197 56 264 A1 ist ein Verfahren zur Herstellung eines aufgeschäumten Granulates bekannt, wobei in einen Extruder ein thermoplastischer Kunststoff eingegeben, der Kunststoff aufgeschmolzen und über eine oder mehrere Einspritzdüsen ein Treibmittel unter Druck zugeführt wird und die mit dem Treibmittel angereicherte Schmelze über eine am Extruderaustritt angeordnete Lochplatte aufschäumend austritt und von einer hinter der Lochplatte angeordneten Schneideinrichtung granuliert wird, dadurch gekennzeichnet, dass die Schmelze aus der Lochplatte kontrolliert gekühlt, unmittelbar in ein strömendes Kühlmedium austritt, dass die Temperatur der Schmelze, die Temperatur des Kühlmediums sowie der Druck im Kühlmedium so eingestellt werden, dass beim Austritt aus der Lochplatte die Oberfläche der Schmelze unmittelbar zu einem glattflächigen, geschlossenen Film mit einer Dicke von 10 bis 500 µm, vorzugsweise 20 bis 200 µm, erstarrt, unter dem die Schmelze aufschäumt, wobei ein Granulat mit einer abgerundeten Oberfläche und einer Schüttdichte von 10 bis 600 g/l ausgebildet wird.

Aufgabe der Erfindung ist, ein verbessertes Granulat, sowie ein verbessertes Verfahren und eine verbesserte Vorrichtung zur Herstellung des Granulates anzugeben.

Die Aufgabe wird erfindungsgemäß gelöst durch ein Verfahren mit den Merkmalen des Anspruchs 1, durch eine Vorrichtung mit den Merkmalen des Anspruchs 7 und durch ein Granulat mit den Merkmalen des Anspruchs 10.

Vorteilhafte Ausgestaltungen der Erfindung sind Gegenstand der Unteransprüche.

Bei einem erfindungsgemäßen Verfahren zur Herstellung eines aufgeschäumten Granulates wird in einen Extruder, insbesondere einen Einschneckenextruder, an einem Aufgabepunkt, beispielsweise einem Trichter, ein thermoplastischer Kunststoff eingegeben, der Kunststoff aufgeschmolzen und über mindestens eine Einspritzdüse ein Fluid als Treibmittel unter Druck zugeführt. Die mit dem Treibmittel angereicherte Schmelze tritt an einem Extruderaustritt aufschäumend aus. Der Extruder umfasst eine Schnecke mit einer ersten Schneckenstufe zwischen dem Aufgabepunkt und der mindestens einen Einspritzdüse und einer zweiten Schneckenstufe zwischen der mindestens einen Einspritzdüse und dem Extruderaustritt. Durch Auswahl einer Geometrie der Schnecke wird ein Druckverlauf im Extruder so geführt, dass der Druck innerhalb der ersten Schneckenstufe zunächst ansteigt, die Schmelze vollständig plastifiziert wird, und dann bis zur mindestens einen Einspritzdüse bei der Zudosierung des treibenden Fluids signifikant abfällt.

Auf diese Weise ist eine gezieltere Einstellung der Dichte des Granulates in Kombination und Wechselwirkung mit der Gestaltung der Schneckengeometrie der zweiten Schneckenstufe möglich. Durch die Möglichkeit veränderter Betriebspunkte kann darüber hinaus eine größere Vielfalt an Materialien verarbeitet werden, wenn die entsprechende Menge der Zudosierung des Fluids angepasst werden kann. Auf diese Weise kann der Temperaturverlauf der Schmelze in der zweiten Schneckenstufe so beeinflusst werden, dass die Massetemperatur an der Lochplatte (Ende der zweiten Schneckenstufe) unter der Massetemperatur am Ende der ersten liegt. Dies führt bei einer späteren Verarbeitung des Granulates in Formteilautomaten zu geringerem Druck und geringerer Temperatur zum Schmelzen, beispielsweise bei Verwendung einer Polypropylen-basierten Mischung mit einer Schmelztemperatur von weniger als 165° C, so dass sich auch der erforderliche Energieeinsatz verringert. Das an der Einspritzdüse zugeführte Treibmittel, insbesondere ein Gas, kann mit einem geringeren Druck und Volumenstrom bereitgestellt werden, so dass der Verbrauch und die genaue Dosiermenge des Treibmittels reduziert wird.

In einer Ausführungsform der Erfindung wird durch Auswahl der Geometrie der Schnecke der Druckverlauf so geführt, dass der Druck bis zur mindestens einen Einspritzdüse für das treibende Fluid auf 1 bar bis 120 bar abfällt. Bei im Stand der Technik bekannten Unterwassergranulierungs-Verfahren für geschäumte Partikel beträgt dieser Druck gewöhnlich 150 bar bis 250 bar. Die erfindungsgemäßen Druckverhältnisse ermöglichen eine freier einstellbare Zudosierung des Treibmittels. Durch den geringeren Druck wird auch der Verschleiß des Extruders verringert.

In einer Ausführungsform der Erfindung wird durch Auswahl der Geometrie der Schnecke der Druckverlauf so geführt, dass der Druck in der zweiten Schneckenstufe von der mindestens einen Einspritzdüse bis zum Extruderaustritt zumindest überwiegend ansteigt. Dies kann auch durch die Prozessführung kontrolliert werden.

In einer Ausführungsform der Erfindung wird durch Auswahl der Geometrie der Schnecke der Druckverlauf so geführt, dass ein volumetrischer Füllgrad in der zweiten Schneckenstufe geringer ist als in der ersten Schneckenstufe. Der Schmelzevolumenstrom in der zweiten Schneckenstufe ist dabei insbesondere durch die Geometrie der Schnecke so gewählt, dass ein Schneckengang oder Schneckengewinde der Schnecke in einer Meteringzone der zweiten Schneckenstufe so gefüllt ist, dass eine homogene Nukleierung des Treibmittels für den nachfolgenden Schäumvorgang so erfolgt, dass der Schäumvorgang erst nach Expansion durch Austritt aus der Lochplatte stattfindet. Die Metering- oder Austragzone ist der Bereich der Schnecke, in dem die Schmelze auf eine gewünschte Verarbeitungstemperatur gebracht, homogenisiert und auf einen solchen Druck gebracht wird, dass ein Widerstand eines nachfolgenden Werkzeugs, beispielweise einer Lochplatte, überwunden werden kann.

Die Schneckengeometrie und die Verfahrensparameter können so gewählt werden, dass die Schmelzetemperatur vom Ende der ersten Schneckenstufe bis zum Ende der zweiten Schneckenstufe abgesenkt wird.

Im Bereich der Begasung, also unmittelbar vor und nach der Einspritzdüse, wird der Druckverlauf insbesondere so geführt, dass sich kein oder nur ein geringer Druckanstieg von max. bis zu 20 bar ergibt. Ein größerer Druckanstieg erfolgt erst in einer sich anschließenden Kompressionszone der zweiten Schneckenstufe sowie in deren Meteringzone.

Die Schneckengeometrie wird abhängig vom verwendeten thermoplastischen Kunststoff oder seiner Mischungen gewählt. Zur Erzielung der beschriebenen Druckverläufe werden im Wesentlichen Ganghöhe, Gangbreite und Gangsteigung eines Schneckengewindes der Schnecke variiert. Grundsätzliche Dimensionierungsregeln für die Durchsätze zweistufiger Schnecken sind aus Potente, H. (Hrsg.): 1. Kunststofftechnisches Seminar: Verfahrenstechnische Auslegung von Plastifizier- und Schmelzaggregaten, Paderborn, 1986 und dazu vorlaufenden Arbeiten bekannt. In dieser Hinsicht wird Bezug genommen auf die Schrift Potente, H. (Hrsg.): 1. Kunststofftechnisches Seminar: Verfahrenstechnische Auslegung von Plastifizier- und Schmelzaggregaten, Paderborn, 1986, deren Inhalt hiermit in diese Anmeldung aufgenommen wird. In dieser Schrift wird der Zusammenhang zwischen Druckverlauf und Schneckengeometrie im Kapitel 6. AUFSCHMELZ- UND DRUCKVERLAUFBERECHNUNG dargestellt. Eine Beispielrechnung ist unter 6.6 angegeben für bestimmte Ganghöhen (Gangtiefe h), Gangbreiten b, Gangsteigungen t und Materialdaten des Kunststoffs und die sich ergebenden Drücke p₁, p₂, p₃, p₄. Im Kapitel 2 sind die Bedeutungen der Formelzeichen erläutert.

In einer Ausführungsform der Erfindung wird das Treibmittel der Schmelze durch die mindestens eine Einspritzdüse, umfassend mindestens einen Begasungsdorn, zugeführt. Der Begasungsdorn ragt durch eine Zylinderwand des Extruders in ein Schneckengewinde der Schnecke hinein, wobei das Schneckengewinde eine Lücke aufweist, durch die der Begasungsdorn während der Rotation der Schnecke passiert. Auf diese Weise sind eine Direktbegasung der Schmelze, auch unterhalb der Aufnahmekapazität der Schmelze, und eine verbesserte und homogenere Dichteeinstellung für das später erzeugte geschäumte Granulat möglich. Dies wird insbesondere erleichtert, da die Schmelze im Bereich der Einspritzdüse nur einen geringen Druck aufweist.

In einer Ausführungsform der Erfindung tritt die mit dem Treibmittel angereicherte Schmelze am Extruderaustritt durch eine dort angeordnete Lochplatte, die thermisch differenziert konditioniert wird, aus und wird von einer hinter der Lochplatte angeordneten Schneideinrichtung granuliert, wobei die Schmelze aus der Lochplatte kontrolliert gekühlt, unmittelbar in ein strömendes Kühlmedium austritt, wobei die Temperatur der Schmelze, die Temperatur des Kühlmediums sowie der Druck im Kühlmedium so eingestellt werden, dass beim Austritt aus der Lochplatte die Oberfläche der Schmelze unmittelbar zu einem glattflächigen, geschlossenen Film erstarrt, unter dem die Schmelze homogen aufschäumt, wobei ein Granulat ausgebildet wird. Im Kern unter der Außenhaut des Granulats wird auf diese Weise eine gleichmäßig homogene Schaumstruktur erreicht. Die Temperatur der Schmelze kann beispielsweise durch aktive Kühlung der Zylinderwand des Extruders beeinflusst werden.

Zur Durchführung des Verfahrens eignet sich eine Vorrichtung, umfassend einen Extruder mit einem Aufgabepunkt für einen thermoplastischen Kunststoff, mindestens einer Einspritzdüse zur Zuführung eines Treibmittels unter Druck und einem Extruderaustritt, wobei der Extruder eine Schnecke mit einer ersten Schneckenstufe zwischen dem Aufgabepunkt und der mindestens einen Einspritzdüse und einer zweiten Schneckenstufe zwischen der mindestens einen Einspritzdüse und dem Extruderaustritt umfasst. Eine Geometrie der Schnecke ist so ausgebildet, dass ein Druck innerhalb der ersten Schneckenstufe zunächst ansteigt, die Schmelze bis dahin aufschmilzt und homogenisiert, und dann bis zur mindestens einen Einspritzdüse abfällt.

In einer Ausbildungsform der Vorrichtung umfasst die mindestens eine Einspritzdüse mindestens einen Begasungsdorn, der durch eine Zylinderwand des Extruders in ein Schneckengewinde der Schnecke hineinragt, wobei das Schneckengewinde eine Lücke aufweist, durch die der Begasungsdorn während der Rotation der Schnecke passiert.

In einer Ausführungsform der Vorrichtung ist die Geometrie der Schnecke so ausgebildet, dass der volumetrische Schmelzefüllgrad in der zweiten Schneckenstufe geringer ist als in der ersten Schneckenstufe, dabei aber eine homogene Verteilung des treibenden Fluids sowie die erforderliche Nukleierung der Schmelze erreicht und ein nennenswertes Aufschäumen der Schmelze vermieden wird.

Die Erfindung betrifft weiter ein Granulat, hergestellt mit dem erfindungsgemäßen Verfahren. Das Granulat umfasst Granulatpartikel oder Granulatkörner mit einer kugelförmigen Form, einer geschlossenen Außenschicht und einem gleichmäßig geschäumten Kern. Das Granulat umfasst eine Anzahl von Granulatkörnern, die typischerweise eine Dichte von 0,01 g/cm³ bis 0,1 g/cm³ und eine Außenhaut aufweisen, deren Dicke im Verhältnis zu einer Zellwanddicke im Inneren des Granulatkorns höchstens 5 beträgt.

Die Zellwanddicke ist somit niedriger als bei aus dem Stand der Technik bekannten Unterwassergranulierungs-Verfahren.

Ausführungsbeispiele der Erfindung werden im Folgenden anhand von Zeichnungen näher erläutert.

Darin zeigen:
- Figur 1: eine schematische Ansicht einer erfindungsgemäßen Vorrichtung zur Herstellung eines aufgeschäumten Granulates, umfassend einen Extruder sowie ein Diagramm mit einem Druckverlauf entlang des Extruders,
- Figur 2: einen schematischen Längsschnitt des Extruders mit einer Schnecke und einem Begasungsdorn, und
- Figur 3: einen schematischen Querschnitt des Extruders mit der Schnecke und dem Begasungsdorn.

Einander entsprechende Teile sind in allen Figuren mit den gleichen Bezugszeichen versehen.

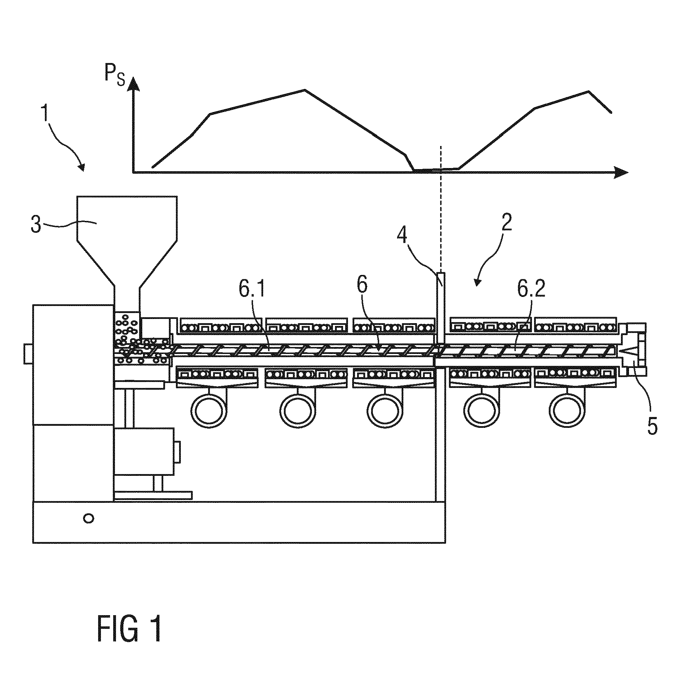

**Figur 1** zeigt eine schematische Ansicht einer erfindungsgemäßen Vorrichtung 1 zur Herstellung eines aufgeschäumten Granulates, umfassend einen Extruder 2 sowie ein Diagramm, dass den Verlauf eines Drucks p_{S} entlang des Extruders 2 darstellt. Der Extruder 2 ist insbesondere als ein Einschneckenextruder ausgebildet. Der Extruder 2 umfasst einen Aufgabepunkt 3, beispielsweise einen Trichter, für einen thermoplastischen Kunststoff, mindestens eine Einspritzdüse 4 zur Zuführung eines Treibmittels unter Druck und einen Extruderaustritt 5, wobei der Extruder 2 eine Schnecke 6 mit einer ersten Schneckenstufe 6.1 zwischen dem Aufgabepunkt 3 und der mindestens einen Einspritzdüse 4 und einer zweiten Schneckenstufe 6.2 zwischen der mindestens einen Einspritzdüse 4 und dem Extruderaustritt 5 umfasst. Eine Geometrie der Schnecke 6 ist so ausgebildet, dass der Druck p_{S} innerhalb der ersten Schneckenstufe 6.1 zunächst ansteigt und dann bis zur mindestens einen Einspritzdüse 4 abfällt.

Die Geometrie der Schnecke 6 ist weiterhin so ausgebildet, dass der volumetrische Schmelzefüllgrad in der zweiten Schneckenstufe 6.2 geringer ist als in der ersten Schneckenstufe 6.1.

Bei einem erfindungsgemäßen Verfahren zur Herstellung eines aufgeschäumten Granulates wird in den Extruder 2 am Aufgabepunkt 3 ein thermoplastischer Kunststoff und gegebenenfalls ein oder mehrere Additive eingegeben, der Kunststoff von der ersten Schneckenstufe 6.1 gefördert und gegebenenfalls unter Zuführung von Wärme aufgeschmolzen und über die mindestens eine Einspritzdüse 4 ein Treibmittel unter Druck zugeführt. Die mit dem Treibmittel angereicherte Schmelze tritt nach Homogenisierung und Abkühlung in der zweiten Schneckenstufe 6.2 am Extruderaustritt 5 aufschäumend aus. Entlang der Schnecke 6 baut sich im geförderten Kunststoff Druck pₛ auf. Dieser ist lokal unterschiedlich. Unter dem Aufgabepunkt 3 herrscht typischerweise Umgebungsdruck. Anschließend steigt der Druck pₛ zunächst an.

In einer Ausführungsform der Erfindung wird durch Auswahl der Geometrie der Schnecke 6 der Druckverlauf so geführt, dass der Druck p_{S} bis zur mindestens einen Einspritzdüse 1 bar bis 120 bar abfällt.

In einer Ausführungsform der Erfindung wird durch Auswahl der Geometrie der Schnecke 6 der Druckverlauf so geführt, dass der Druck p_{S} in der zweiten Schneckenstufe 6.2 von der mindestens einen Einspritzdüse 4 bis zum Extruderaustritt 5 ansteigt.

Im Bereich der Begasung, also unmittelbar vor und nach der Einspritzdüse 4, wird der Druckverlauf insbesondere so geführt, dass sich kein oder nur ein geringer Druckanstieg bis max. 20 bar ergibt. Ein größerer Druckanstieg erfolgt erst in einer sich anschließenden Kompressionszone der zweiten Schneckenstufe 6.2 sowie in deren Meteringzone.

Die Schneckengeometrie wird abhängig vom rheologischen Verhalten des verwendeten thermoplastischen Kunststoff bzw. seiner Mischungen gewählt, sodass in der zweiten Schneckenstufe kontrollierender Einfluss auf die Schmelzetemperaturführung erfolgen kann, so dass die Massetemperatur am Ende der zweiten Schneckenstufe unter der Massetemperatur am Ende der ersten liegt.

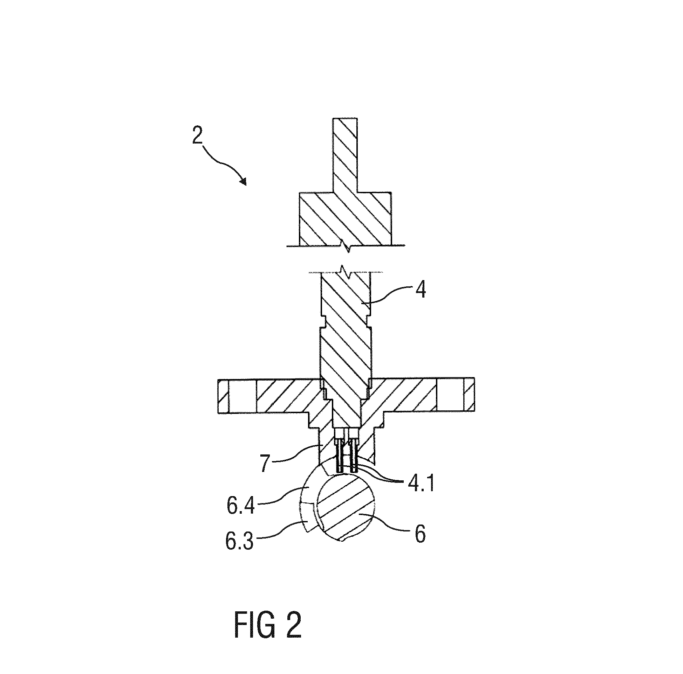

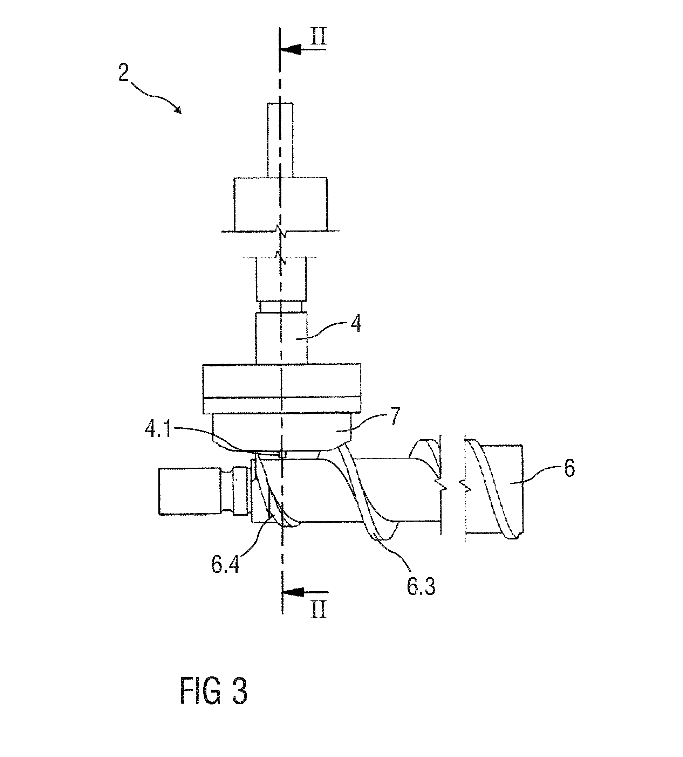

**Figur 2** zeigt einen schematischen Längsschnitt des Extruders 2 mit der Schnecke 6 und zwei Begasungsdornen 4.1 der Einspritzdüse 4. **Figur 3** zeigt einen schematischen Querschnitt des Extruders 2 mit der Schnecke 6 und dem Begasungsdorn 4.1.

Das Treibmittel wird der Schmelze durch den Begasungsdorn 4.1 zugeführt. Der Begasungsdorn 4.1 ragt durch eine Zylinderwand 7 des Extruders 2 in ein Schneckengewinde 6.3 der Schnecke 6 hinein, wobei das Schneckengewinde 6.3 eine Lücke 6.4 aufweist, durch die der Begasungsdorn 4.1 während der Rotation der Schnecke 6 passiert.

In einer Ausführungsform der Erfindung tritt die mit dem Treibmittel angereicherte Schmelze am Extruderaustritt 5 durch eine dort angeordnete Lochplatte (nicht dargestellt) aus und wird von einer hinter der Lochplatte angeordneten Schneideinrichtung (nicht dargestellt) granuliert, wobei die Schmelze aus der Lochplatte kontrolliert gekühlt, unmittelbar in ein strömendes Kühlmedium austritt, wobei die Temperatur der Schmelze, die Temperatur des Kühlmediums sowie der Druck im Kühlmedium so eingestellt werden, dass beim Austritt aus der Lochplatte die Oberfläche der Schmelze unmittelbar zu einem glattflächigen, geschlossenen Film erstarrt, unter dem die Schmelze aufschäumt, wobei ein Granulat ausgebildet wird.

### BEZUGSZEICHENLISTE

- 1: Vorrichtung
- 2: Extruder
- 3: Aufgabepunkt
- 4: Einspritzdüse
- 4.1: Begasungsdorn
- 5: Extruderaustritt
- 6: Schnecke
- 6.1: erste Schneckenstufe
- 6.2: zweite Schneckenstufe
- 6.3: Schneckengewinde
- 6.4: Lücke
- 7: Zylinderwand
- p_{S}: Druck

## Patentansprüche

1. Verfahren zur Herstellung eines aufgeschäumten Granulates, wobei in einen Extruder (2) an einem Aufgabepunkt (3) ein thermoplastischer Kunststoff eingegeben, der Kunststoff aufgeschmolzen und über mindestens eine Einspritzdüse (4) ein Treibmittel unter Druck zugeführt wird und die mit dem Treibmittel angereicherte Schmelze an einem Extruderaustritt (5) aufschäumend austritt, wobei der Extruder (2) eine Schnecke (6) mit einer ersten Schneckenstufe (6.1) zwischen dem Aufgabepunkt (3) und der mindestens einen Einspritzdüse (4) und einer zweiten Schneckenstufe (6.2) zwischen der mindestens einen Einspritzdüse (4) und dem Extruderaustritt (5) umfasst, **dadurch gekennzeichnet, dass** durch Auswahl einer Geometrie der Schnecke (6) ein Druckverlauf im Extruder (2) so geführt wird, dass der Druck(pₛ) innerhalb der ersten Schneckenstufe (6.1) zunächst ansteigt und dann bis zur mindestens einen Einspritzdüse (4) abfällt.

2. Verfahren nach Anspruch 1, **dadurch gekennzeichnet, dass** durch Auswahl der Geometrie der Schnecke (6) der Druckverlauf so geführt wird, dass der Druck(pₛ) bis zur mindestens einen Einspritzdüse (4) auf 1 bar bis 120 bar abfällt.

3. Verfahren nach einem der Ansprüche 1 oder 2, **dadurch gekennzeichnet, dass** durch Auswahl der Geometrie der Schnecke (6) der Druckverlauf so geführt wird, dass der Druck(pₛ) in der zweiten Schneckenstufe (6.2) von der mindestens einen Einspritzdüse (4) bis zum Extruderaustritt (5) überwiegend ansteigt.

4. Verfahren nach einem der vorhergehenden Ansprüche, **dadurch gekennzeichnet, dass** durch Auswahl der Geometrie der Schnecke (6) der Druckverlauf so geführt wird, dass der volumetrische Füllgrad in der zweiten Schneckenstufe (6.2) geringer ist als in der ersten Schneckenstufe (6.1).

5. Verfahren nach einem der vorhergehenden Ansprüche, **dadurch gekennzeichnet, dass** die Schneckengeometrie und die Verfahrensparameter so gewählt werden, dass die Schmelzetemperatur vom Ende der ersten Schneckenstufe (6.1) bis zum Ende der zweiten Schneckenstufe (6.2) abgesenkt wird.

6. Verfahren nach einem der vorhergehenden Ansprüche, **dadurch gekennzeichnet, dass** das Treibmittel durch die mindestens eine Einspritzdüse (4), umfassend mindestens einen Begasungsdorn (4.1), zugeführt wird, der in ein Schneckengewinde (6.3) der Schnecke (6) hineinragt, wobei das Schneckengewinde (6.3) eine Lücke (6.4) aufweist, durch die der Begasungsdorn (4.1) während einer Rotation der Schnecke (6) passiert.

7. Verfahren nach einem der vorhergehenden Ansprüche, **dadurch gekennzeichnet, dass** die mit einem Fluid als Treibmittel angereicherte Schmelze am Extruderaustritt (5) durch eine dort angeordnete Lochplatte austritt und von einer hinter der Lochplatte angeordneten Schneideinrichtung granuliert wird, wobei die Schmelze aus der Lochplatte kontrolliert gekühlt, unmittelbar in ein strömendes Kühlmedium austritt, wobei die Temperatur der Schmelze, die Temperatur des Kühlmediums sowie der Druck im Kühlmedium so eingestellt werden, dass beim Austritt aus der Lochplatte die Oberfläche der Schmelze unmittelbar zu einem glattflächigen, geschlossenen Film erstarrt, unter dem die Schmelze aufschäumt, wobei ein Granulat ausgebildet wird.

8. Vorrichtung (1) zur Durchführung des Verfahrens nach einem der vorhergehenden Ansprüche, umfassend einen Extruder (2) mit einem Aufgabepunkt (3) für einen thermoplastischen Kunststoff oder einer Mischung thermoplastischer Kunststoffe, mindestens eine Einspritzdüse (4) zur Zuführung eines Treibmittels unter Druck und einen Extruderaustritt (5), wobei der Extruder (2) eine Schnecke (6) mit einer ersten Schneckenstufe (6.1) zwischen dem Aufgabepunkt (3) und der mindestens einen Einspritzdüse (4) und einer zweiten Schneckenstufe (6.2) zwischen der mindestens einen Einspritzdüse (4) und dem Extruderaustritt (5) umfasst, **dadurch gekennzeichnet, dass** eine Geometrie der Schnecke (6) so ausgebildet ist, dass ein Druck (pₛ) innerhalb der ersten Schneckenstufe (6.1) zunächst ansteigt und dann bis zur mindestens einen Einspritzdüse (4) abfällt.

9. Vorrichtung (1) nach Anspruch 8, **dadurch gekennzeichnet, dass** die mindestens eine Einspritzdüse (4) mindestens einen Begasungsdorn (4.1) umfasst, der in ein Schneckengewinde (6.3) der Schnecke (6) hineinragt, wobei das Schneckengewinde (6.3) eine Lücke (6.4) aufweist, durch die der Begasungsdorn (4.1) während der Rotation der Schnecke (6) passiert.

10. Vorrichtung (1) nach einem der Ansprüche 8 oder 9, **dadurch gekennzeichnet, dass** die Geometrie der Schnecke (6) so ausgebildet ist, dass der volumetrische Füllgrad in der zweiten Schneckenstufe (6.2) geringer ist als in der ersten Schneckenstufe (6.1).

11. Granulat, hergestellt mit dem Verfahren nach einem der Ansprüche 1 bis 7, umfassend Granulatpartikel mit einer kugelförmigen Form, einer geschlossenen Außenschicht und einem gleichmäßig geschäumten Kern.
